(19) Europäisches Patentamt / European Patent Office / Office européen des brevets

(11) **EP 4 315 327 B1**

(12) **EUROPEAN PATENT SPECIFICATION**

(45) Date of publication and mention
of the grant of the patent:
**25.06.2025 Bulletin 2025/26**

(21) Application number: **22713495.4**

(22) Date of filing: **17.03.2022**

(51) International Patent Classification (IPC):
*G10L 21/02* (2013.01)          *G06N 3/044* (2023.01)
*G06N 3/045* (2023.01)          *G06N 3/084* (2023.01)
*G10L 21/0208* (2013.01)        *G10L 25/30* (2013.01)

(52) Cooperative Patent Classification (CPC):
**G10L 21/02; G06N 3/044; G06N 3/045;
G06N 3/084; G10L 21/0208;** G10L 25/30

(86) International application number:
**PCT/US2022/020790**

(87) International publication number:
**WO 2022/203939 (29.09.2022 Gazette 2022/39)**

(54) **ROBUSTNESS/PERFORMANCE IMPROVEMENT FOR DEEP LEARNING BASED SPEECH ENHANCEMENT AGAINST ARTIFACTS AND DISTORTION**

TIEFENLERNBASIERTE SPRACHVERBESSERUNG GEGEN ARTEFAKTE UND VERZERRUNGEN

AMÉLIORATION DE LA PAROLE FONDÉE SUR L'APPRENTISSAGE PROFOND CONTRE LES ARTEFACTS ET LA DISTORSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.03.2021   PCT/CN2021/082199
28.04.2021   US 202163180705 P
08.06.2021   EP 21178178**

(43) Date of publication of application:
**07.02.2024 Bulletin 2024/06**

(73) Proprietor: **Dolby Laboratories Licensing
Corporation
San Francisco, CA 94103 (US)**

(72) Inventors:
• **SUN, Jundai**
  **San Francisco, California 94103 (US)**
• **LU, Lie**
  **San Francisco, California 94103 (US)**
• **SHUANG, Zhiwei**
  **San Francisco, California 94103 (US)**

(74) Representative: **Dolby International AB
Patent Group Europe
77 Sir John Rogerson's Quay
Block C
Grand Canal Docklands
Dublin, D02 VK60 (IE)**

(56) References cited:
**EP-A1- 3 716 270      US-A1- 2020 312 343**

• **KIM MINJE ET AL: "Adaptive Denoising
Autoencoders: A Fine-Tuning Scheme to Learn
from Test Mixtures", LATENT VARIABLE
ANALYSIS AND SIGNAL SEPARATION : 12TH
INTERNATIONAL CONFERENCE, LVA/ICA 2015,
LIBEREC, CZECH REPUBLIC, AUGUST 25-28,
2015, PROCEEDINGS, 1 January 2015
(2015-01-01), Cham, XP055862152, ISBN:
978-3-319-22482-4, Retrieved from the Internet
<URL:https://link.springer.com/content/pdf/
10.1007/978-3-319-22482-4_12.pdf> [retrieved on
20211116], DOI: 10.1007/978-3-319-22482-4**

• SONI MEET H ET AL: "Sub-band Autoencoder features for Automatic Speech Recognition", 2017 NINTH INTERNATIONAL CONFERENCE ON ADVANCES IN PATTERN RECOGNITION (ICAPR), IEEE, 27 December 2017 (2017-12-27), pages 1 - 5, XP033484919, DOI: 10.1109/ICAPR.2017.8593069

**Description**

TECHNICAL FIELD

The disclosure relates to the field of audio processing. In particular, the disclosure relates to techniques for audio enhancement (e.g., speech enhancement) using deep-learning models or systems, and to frameworks for training deep-learning models or systems for audio enhancement.

BACKGROUND

Speech enhancement aims to enhance or separate the speech signal (speech component) from a noisy mixture signal. Numerous speech enhancement approaches have been developed over the last several decades. In recent years, speech enhancement has been formulated as a supervised learning task, where discriminative patterns of clean speech and background noise are learned from training data. However, these algorithms all suffer from different processing distortions when dealing with different acoustic environments. Typical processing distortions include target loss, interference, and algorithmic artifacts.

Thus, there is a need for improved deep learning based methods of audio processing, including speech enhancement, that can reduce artifacts and/or distortion.

Document EP 3 716 270 A1 describes a speech processing system comprising an input that receives an input speech signal that comprises clean speech and acoustic interference; a first neural network circuit configured to suppress the acoustic interference in the input speech signal and output a representation of an estimate of a clean speech signal; and a second neural network circuit configured to receive the representation of the estimated clean speech signal and restore at least one speech component of the clean speech in the input speech signal and output a reconstructed speech signal.

Reference is also made to Kim Minje et al: "Adaptive Denoising Autoencoders: A Fine-Tuning Scheme to Learn from Test Mixtures", Latent Variable Analysis and Signal Separation : 12th International Conference, LVA/ICA 2015; and to US 2020/312343 A1 (HSIUNG WEI WEI [TW]) 1 October 2020.

SUMMARY

In view of the above, in accordance with the invention, it is provided a method of processing an audio signal, as well as a corresponding apparatus, computer program, and computer-readable storage medium, having the features of the respective independent claims.

It will be appreciated that apparatus features and method steps may be interchanged in many ways. In particular, the details of the disclosed method(s) can be realized by the corresponding apparatus, and vice versa, as the skilled person will appreciate. Moreover, any of the above statements made with respect to the method(s) (and, e.g., their steps) are understood to likewise apply to the corresponding apparatus (and, e.g., their blocks, stages, units), and vice versa.

BRIEF DESCRIPTION OF DRAWINGS

Example embodiments of the disclosure are explained below with reference to the accompanying drawings, wherein

**Fig. 1** and **Fig. 2** schematically illustrate examples of an apparatus (e.g., system or device) implementing methods of audio processing according to embodiments of the disclosure,

**Fig. 3** schematically illustrates an example of a processing block of the apparatus, according to embodiments of the disclosure,

**Fig. 4, Fig. 5, Fig. 6,** and **Fig. 7** schematically illustrates further examples of an apparatus implementing methods of audio processing according to embodiments of the disclosure,

**Fig. 8** schematically illustrates an example of a framework for employing an apparatus implementing methods of audio processing according to embodiments of the disclosure,

**Fig. 9** schematically illustrates yet another example of an apparatus implementing methods of audio processing according to embodiments of the disclosure,

**Fig. 10** is a flowchart schematically illustrating an example of a method of audio processing according to embodiments of the disclosure, and

**Fig. 11** is a flowchart schematically illustrating another example of a method of audio processing according to embodiments of the disclosure.

DETAILED DESCRIPTION

The Figures (Figs.) and the following description relate to preferred embodiments by way of illustration only. It should be noted that from the following discussion, alternative embodiments of the structures and methods disclosed herein will be readily recognized as viable alternatives that may be employed without departing from the principles of what is claimed.

Reference will now be made in detail to several embodiments, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated herein may be employed without departing from the principles described herein.

As noted above, conventional deep learning based speech enhancement typically introduces distortion and artifacts. To alleviate this issue, this present disclosure proposed a multi-stage deep learning based speech enhancement framework capable of reducing artifacts and distortion. The framework includes two blocks, i.e., a 'separator' and an 'improver', where the separator is used to perform first round denoising and the subsequent improver aids to reduce distortion and remove artifacts introduced by the separator. In addition, the improver can also work as a 'manager' to merge and balance the output of a set of separators, for eventually outputting a comprehensive result.

Notably, while the present disclosure frequently makes reference to speech enhancement (e.g., in the first stage), it is understood that the present disclosure generally relates to any audio processing or audio enhancement in the first stage that may introduce distortion and/or artifacts, both conventional and deep learning based.

*Method Overview*

Speech enhancement has been recently formulated as a supervised learning task, where discriminative patterns of clean speech and background noise are learned from training data. Currently, supervised speech enhancement algorithms basically can be categorized into two groups. One group includes wave domain based models, and the other group includes transformed domain (transform domain) based models. The target of wave domain based models is essentially the clean wave, while for the transform domain based models, the target can be a bin based mask (e.g., magnitude mask, phase-sensitive mask, complex mask, binary mask, etc.) or a band based mask, depending on respective use cases.

Given a mixture y (e.g., an input audio signal), which could be a mono, stereo or even a multi-channel signal, the goal of speech enhancement is to separate the target speech s (e.g., speech component) from background $n$ (e.g., background, noise, or residual component). The noisy signal $y$ can be modeled as

$$y(k) = s[k] + n[k]$$

$$\text{Eq. (1)}$$

where k is the time sample index. Transforming the above model to the spectral domain (as a non-limiting example of the transform domain) yields

$$Y_{m,f} = S_{m,f} + N_{m,f}$$

$$\text{Eq. (2)}$$

where $Y$, $S$, and $N$ denote the time-frequency (T-F) representations of $y$, s and $n$, respectively, while $m$ and $f$ denote the time frame and frequency bin, respectively. The T-F representation $\hat{S}_{m,f}$ of the enhanced speech can be written as

$$\hat{S}_{m,f} = S_{m,f} + E_{m,f}^{target} + E_{m,f}^{interf} + E_{m,f}^{artif}$$

$$Eq. (3)$$

where $E^{target}$ indicates the target distortion caused by the speech enhancement algorithm, while $E^{interf}$ and $E^{artif}$ are respectively the interferences (e.g., residual T-F components from noise) and artifacts (e.g., "burbling" artifacts or musical noise) error terms.

Different speech enhancement algorithms will have different kinds of distortions, which may also be correlated with noise type and signal-to-noise condition. To derive a speech enhancer that is robust against processing artifacts, the present disclosure proposes a new model framework that comprises two blocks: one 'separator' block and one 'improver' block.

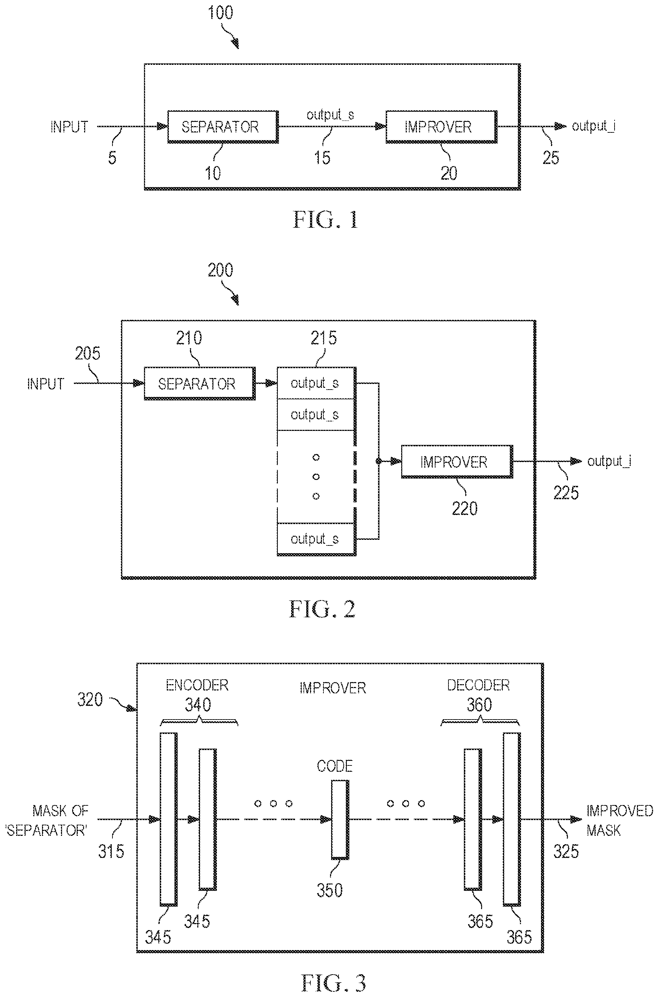

**Fig. 1** is a block diagram schematically illustrating an apparatus (e.g., system or device) in accordance with this model framework. The system 100 for speech enhancement (or audio enhancement / processing in general) comprises the separator block (separator) 10 and the improver block (improver) 20. An audio signal 5 (e.g., containing the aforementioned mixture *y*) is input to the system 100. The separator 10 implements a first stage or first step of the proposed model framework. It is used to perform first round denoising of the input audio signal 5. An output 15 of the separator 10 may relate to a modified version of the input audio signal 5, i.e., to a waveform domain audio signal (not encompassed by the independent claims), or to a mask that can be applies to the audio signal in the transform domain, as will be described in more detail later.

The downstream improver 20 implements a second stage or second step of the model framework. It receives and operates on the output 15 of the separator 10. The improver 20 processes the output 15 of the separator 10 to reduce the target distortion, remove or suppress artifacts, and/or remove or suppress residual noise in the audio signal. The improver 20 eventually generates an output 25, which may relate to a (further) modified waveform signal (not encompassed by the independent claims) or to a modified mask, as will be described in more detail below. It should be noted that the proposed framework does not relate to a concatenation of two separate models, but relates indeed to a single unified model. The separator 10 and the improver 20 are merely two (conceptual) blocks in the model.

Notably, while the separator 10 may be implemented both as a deep neural network (DNN) or by a traditional audio processing component, the improver 20 according to the present disclosure is implemented by a deep neural network, i.e., is deep learning based.

While there are many separators 10 proposed in academia and industry, the present disclosure will mainly focus on the improver 20, including potential structures and implementations, collaboration with the separator 10, and training strategies.

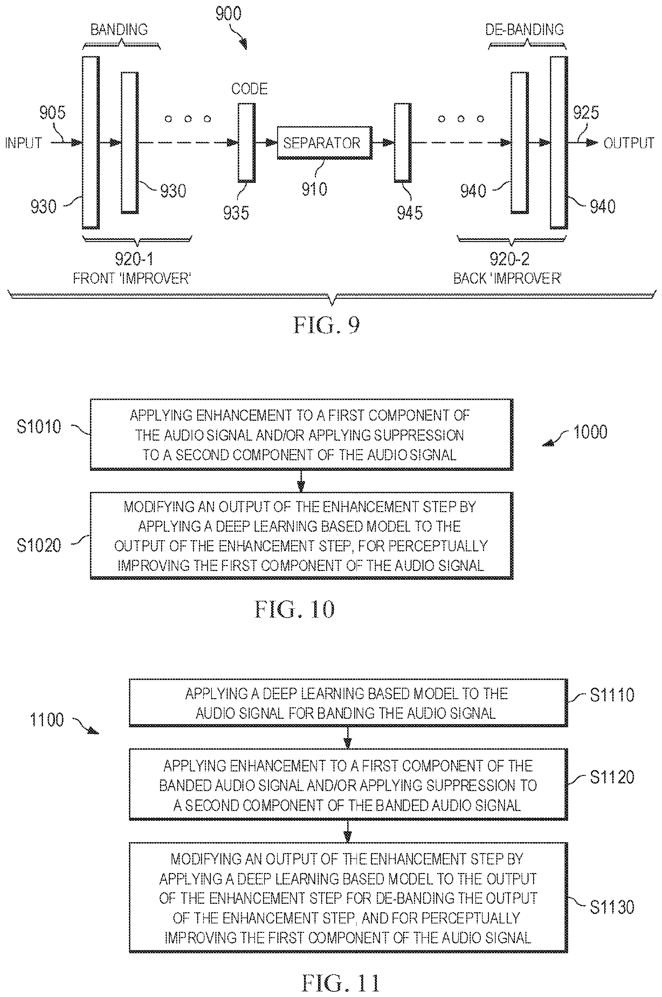

In line with the above, an example of a method 1000 of audio processing (e.g., audio enhancement, such as speech enhancement) is schematically illustrated in the flowchart of **Fig. 10.** Method 1000 may be a method of speech enhancement, for example. It comprises steps S1010 and S1020.

Step S1010 is a first step (e.g., enhancement step or separation step) for applying enhancement to a first component of the audio signal 5 (e.g., speech) and/or applying suppression to a second component of the audio signal 5 (e.g., noise or background). It is understood that enhancement of the first component may be relative to the second component, and/or suppression of the second component may be relative to the first component. Thereby, the first step at least partially isolates the first component from any residual components of the audio signal 5. As such, the first step may also be said to perform a denoising operation for the audio signal 5.

As noted above, the first step can be a step for applying speech enhancement (not encompassed by the independent claims) to the audio signal 5. In this case, the first component is a speech component and the second component is a noise, background, or residual component, or the like.

Moreover, it is understood that the first step may be implemented both by traditional audio processing means, as well as by a deep neural network. That is, the first step may be a deep learning based step in some implementations, for enhancing the first component of the audio signal and/or suppressing the second component of the audio signal relative to the first component.

Step S1020 is a second step (e.g., modification step or improvement step) of modifying an output of the first step by applying a deep learning based model to the output of the first step, for perceptually improving the first component of the audio signal. Here, perceptual improvement may relate to (or may comprises) the removal (or at least suppression) of distortion and/or artifacts introduced by the first step, as well as possibly any remaining unwanted components (e.g., noise or background) not removed by the first step.

It is understood that step S1010 may be implemented by the aforementioned separator 10 and that step S1020 may be implemented by the aforementioned improver 20.

The first and second steps (and likewise, the separator 10 and the improver 20) operate in the transform domain. One non-limiting example of the transform domain is the spectral domain. In general, the transformation translating from the waveform domain to the transform domain may involve a time-frequency transform. As such, the transform domain may also be referred to as frequency domain.

When operating in the waveform domain (not encompassed by the independent claims), the first step (and likewise, the separator 10) receives a time domain (waveform domain) audio signal and applies enhancement of the first component and/or suppression of the second component relative to the first component by (directly) modifying the time domain audio signal. In this case, the output of the first step (and likewise, of the separator 10) is a waveform domain audio signal in which the first component is enhanced and/or the second component is suppressed.

The output of the first step (and likewise, of the separator 10) is a transform domain mask (e.g., bin based mask or band based mask) indicating weighting coefficients for individual bins or bands of the audio signal. Applying this mask to the (transform domain) audio signal would then result in the enhancement of the first component and/or the suppression of the second component relative to the first component. The (transform domain) bins may be time frequency bins, for example. Moreover, the mask may be a magnitude mask, phase-sensitive mask, complex mask, binary mask, etc., for example. It is understood that the method 1000 may optionally comprise an (initial) step of transforming the audio signal to the transform domain and/or a (final) step for implementing the inverse transform. Analogously, the apparatus described in the present disclosure may include a transform stage and an inverse transform stage.

Returning to **Fig. 1,** the improver 20 receives the output 15 of the separator 10 as input. It can take either the output of a single frame or the output of multiple frames from the separator 10.

For the first option, the improver 20 (and likewise, the second step) can work on the single output of the separator 10, as shown in **Fig. 1.** For example, if the output 15 of the separator 10 is a mask for one frame, the improver 20 would be trained based on this single-frame mask. Therein, the separator 10 (if implemented by a deep neural network) and the improver 20 can be trained at the same time (i.e., simultaneously), or the two-stage training strategy set out below of first training the separator 10 and then training the improver 20 could be followed. In general, it can be said that for the first option, both training and operation of the second step (and likewise, of the improver) may proceed on a frame-by-frame basis.

For the second option, the improver 220 (and likewise, the second step) can work on multiple outputs 215 of the separator 210. This situation is schematically illustrated in **Fig. 2.** For example, the output 215 of the separator 210 may be a mask of one frame, and the improver 220 may be trained based on several outputs 215 of the separator 210. In other words, the output 215 of the separator 210 may be sequenced / accumulated until a large enough number of frames are available. Then, these multiple outputs 215 of the separator 210 may be fed into the improver 220 for training. When working with this option, the separator 210 (if implemented by a deep neural network) may be trained first.

In line with the above, it can be said that for the second option the second step (and likewise, the improver) receives a plurality of instances of output of the first step (and likewise, of the separator). Each of the instances corresponds, for example, to a respective one of a plurality of frames of the audio signal. Further, each instance may correspond to a mask for one frame, or to one frame of audio. Then, the second step jointly applies the machine learning based model to the plurality of instances of output, for perceptually improving the first component of the audio signal in one or more of the plurality of frames of the audio signal. As noted above, the deep learning based model of the second step may have been trained based on a plurality of instances of the output of the first step and a corresponding plurality of frames of a reference audio signal for the audio signal.

In another implementation of the second step, operation and training of the second step may be based on a shifting window of frames including a given frame. As such, the method may maintain a history of previous frames to be taken into account when generating an output for the given frame. Specifically, in this implementation the second step receives, for processing the given frame of the audio signal, a sequence of instances of output of the first step, where each of the instances corresponds to a respective one in a sequence of frames of the audio signal. It is understood that the sequence of frames includes the given frame. Then, the second step jointly applies the machine learning based model to the sequence of instances of output, for perceptually improving the first component of the audio signal in the given frame. The given frame may be the most recent frame in the sequence of frames, for example.

*Improver Network Structure*

The improver network should depend on the design of the separator and should specifically ensure that the output of the separator matches the input of the improver. Moreover, the improver should also be designed based on the specific issues of the separator that need to be addressed (e.g., distortion, artifacts, etc.). A wide range of implementations are available for the improver. The following implementations have been found to be advantageous for the purposes at hand: 1) an auto-encoder (AE) structure with a bottleneck layer to generate a smooth soft-mask in the frequency domain, 2) a recurrent neural network (RNN) / long short-term memory (LSTM) model enabling output of temporally smooth results, and 3) a generative model for recovering missing harmonics in the separator component.

*Auto-Encoder Based Improver*

Most spectral domain based speech enhancement algorithms suffer from artifacts caused by discontinuous masks, strong/instable residual noise under low SNR conditions, and residual noise within non-dialog segments. To address these problems, the present disclosure proposes the AE based improver schematically shown **Fig. 3.** Accordingly, the deep learning based model implementing the improver (or the second step, for that matter) comprises an auto-encoder architecture. The auto-encoder structure has an encoder stage (or encoder) 340 and a decoder stage (or decoder) 360. Each of the encoder 340 and the decoder 360 comprises a respective plurality of consecutive filter layers 345, 365. The encoder 340 maps an input 315 thereto to a latent space representation 350. The last layer of the encoder 340 may be referred to as a bottleneck layer. The output of the bottleneck layer is the aforementioned latent space representation 350. The decoder 360 maps the latent space representation 350 output by the encoder 340 back to the initial format, i.e., to an output of the decoder 325 that has the same format as the input 315 to the encoder 340. Thus, the encoder 340 may be said to successively (i.e., from one layer to the next) reduce the dimension of its input 315, and the decoder 360 may be said to successively enhance the dimension of its input (i.e., the latent space representation 350) back to the original dimension. Accordingly, the format of the input / output may correspond to a dimension (dimensionality) of the input / output. The input 315 to encoder 340 (i.e., the output of the first step) may be the aforementioned mask and the output 325 of the decoder 360 may be an improved mask, for example.

In one example, the encoder 340 comprises a plurality of consecutive layers 345 (e.g., DNN layers) with successively decreasing node number, and the decoder 360 also comprise a plurality of consecutive layers 365 (e.g., DNN layers) with successively increasing node number. For example, the encoder 340 and the decoder 360 may have the same number of layers, the outermost layer of the encoder 340 may have the same number of nodes as the outermost layer of the decoder 360, the next-to-outermost layer of the encoder 340 may have the same number of nodes as the next-to-outermost layer of the decoder 360, and so forth, up to respective innermost layers.

In such an auto-encoder structure, the encoder learns efficient data representations (i.e., latent space representations) of the mask estimated by the separator (as a non-limiting example of the output of the separator) to remove 'mask noise', and the decoder generates an improved mask from the latent representation space, by mapping back to the initial space. The improved mask can be smoother and have less artifacts due to the mask compression conducted by the encoder. Moreover, such mask reconstruction by an AE based improver will also help to fix speech distortion and have a better discrimination between speech and noise, where the better discrimination will help to remove most of the residual noise within the non-speech segments.

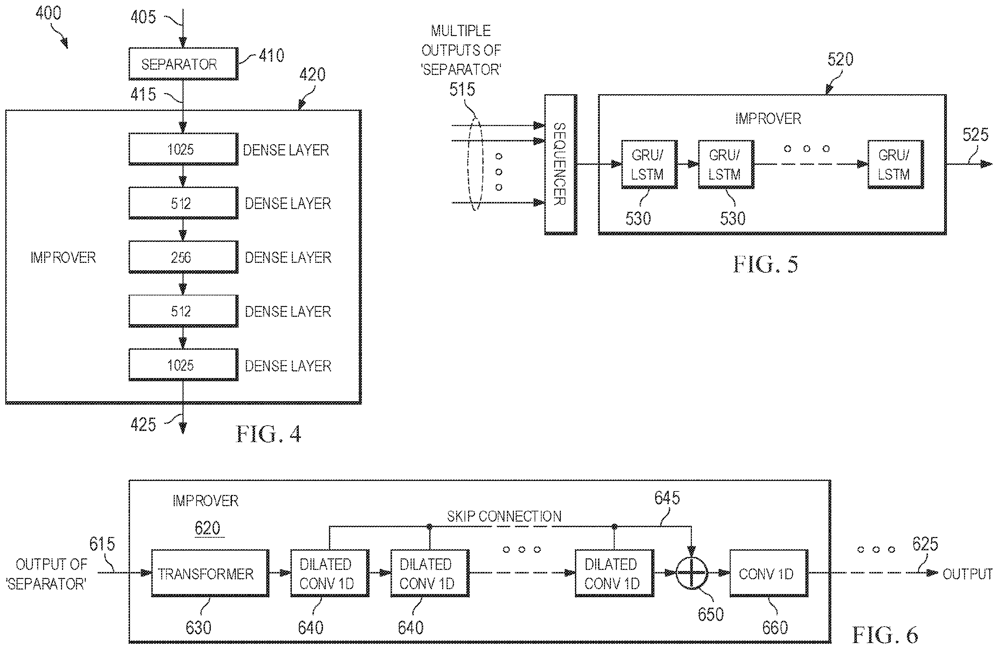

A specific non-limiting example of an AE based implementation of the improver 420 is schematically illustrated in **Fig. 4.** The separator 410 in this example is implemented by a multi-scale convolutional neural network working over the T-F domain. For a 48kHz audio signal 405, the input is transformed to the T-F domain by using 4096 short time Fourier transforms (STFT) with a 50% overlap. Then the 2049-point magnitude is grouped into 1025 bands. Eight frames are fed to the separator 410 (i.e., the input dimension is 8 x 1025), and the target is a magnitude mask of one frame (i.e., dimension 1 x 1025). The AE based improver 420 is implemented using a series of DNN layers (e.g., with 512, 256, 512, and 1025 nodes, respectively). The encoder of the AE structure learns 256-dimentional representations of the mask, and the decoder reconstructs the improved 1025-dimensional mask by using these 256-dimensional representations. It has been found that such an improver can fix at least part of the target distortion, can further remove at least part of the residual noise, and can alleviate at least part of the audible artifacts. Generally, the perceptual quality is significantly improved by the AE based improver.

*Recurrent Neural Network Based Improver*

In view of the temporal discontinuity of some frame based speech enhancement algorithms, the improver may be implemented using a RNN based architecture that uses multiple outputs of the separator.

An example of such implementation is schematically illustrated in **Fig. 5.** The separator may be the same as for the AE based implementation, for example. The improver 520 comprises a plurality of consecutive layers. In the example, these layers are gated recurrent unit (GRU) / LSTM layers. The separator 520 may have been trained first, for example with eight frames as input. At runtime, the separator is fed with 32 blocks, with each block comprising eight frames and a frame-shift of one frame (so that altogether 39 frames are fed to the separator 510). The separator 510 processes 32 blocks and outputs the results of 32 frames accordingly. These 32-frame results are then fed it into the improver 520 as the input. The GRU / LSTM based improver 520 operates on the outputs 515 of the separator and help to improve speech quality and consistency. The nodes of the GRU / LSTM output layer can be chosen to generate the final result. For example, a one-frame output based on 32 history frames can be chosen, or it can be chosen to generate 32 frames output at a time.

In general, the deep learning based model of the improver (and likewise, the second step) may implement a recurrent neural network architecture with a plurality of consecutive layers. Therein, the plurality of layers may be layers of long short-term memory type or gated recurrent unit type.

*Generative Model Based Improver*

It has been found that mask based methods often perform well to separate the dominant harmonic components in noisy speech, but may not perform well on those speech components that are masked / degraded by noise. Using a generative model, such as waveNet or SampleRNN, for example, may be able to reconstruct those missing speech components.

An example of an implementation of the improver using a generative model is schematically illustrated in **Fig. 6.** In the example, a transformer 630 (or ISTFT) is optionally added to transform the output 615 of the separator to the waveform domain, if necessary. The improver 620 then uses a series of 1-D dilated convolutionally layers 640 with a skip connection 645 followed by a 1-D convolutional layer 660 to generate a modified audio signal 625 (e.g., modified dialog signal). It may recover the degraded speech components caused by the separator and may also help to remove the residual noise that cannot be removed by the separator.

In general, the deep learning based model of the improver (and likewise, the second step) may implement a generative model architecture with a plurality of consecutive convolutional layers. Therein, the convolutional layers may be dilated convolutional layers, optionally comprising one or more skip connections.

*Training Strategy*

The present disclosure proposes two alternative training strategies for the separator-improver framework described herein. Therein, it is assumed that the separator and the improver each comprise or implement a deep learning based model, and that training the separator / improver corresponds to training their respective deep learning based models.

The first training strategy is a two-stage training strategy. At a first training stage, the separator is trained, and its corresponding loss will be optimized via back propagation. Once the separator has been trained, all its parameters are fixed (i.e., untrainable), and the output of the trained separator will be fed into the improver. At a second training stage, only the parameters of the improver are trained, and the loss function of the improver is optimized via back propagation. As such, the whole framework can be used as an entire model while the separator and the improver are trained in two training stages separately. In other words, the improver can be regarded as a deep learning based customized post-processing block for the separator, which can generally improve the performance of the separator.

According to the second training strategy, the separator and the improver can be trained at the same time (i.e., simultaneously). A challenge and important issue in doing so may be to ensure that each of the separator and the improver performs its respective own function, i.e., the separator is expected to extract the speech signal and the improver is expected to improve the performance of the separator. In order to achieve this goal, a 'constrained' training strategy is proposed, in which the loss function used for training not only considers the final output of the improver, but also the intermediate output of the separator. The loss function used for training may be a common loss function for both the deep learning based model of the separator and the deep learning model of the improver (respectively applied in the first step and second step of the corresponding processing method). That is, the loss function is based on both the output of the separator and the output of the improver, in addition to appropriate reference data. By considering both the separator loss and the improver loss, the separator can be trained towards dialog separation (or any desired audio processing function in general), and convergence of the improver will be improved since the output of the separator also converges towards the final goal.

*Method Extensions*

Next, generalizations, extensions, and modifications of the aforementioned apparatus and methods will be described.

*Multiple Separators*

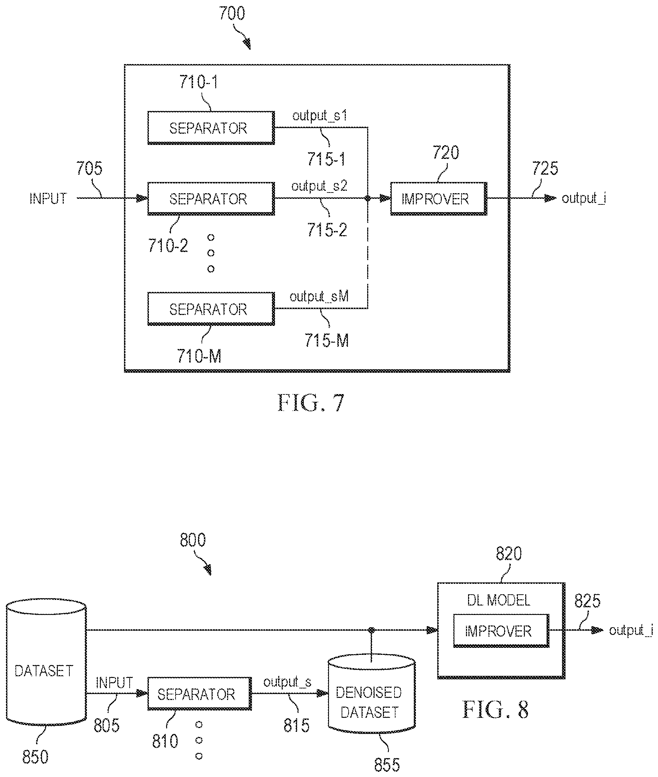

A number of supervised speech enhancement algorithms have been developed in the past, each with its own advantages and disadvantages. For example, some methods can work well over stationary noise, while others may work well over non-stationary noise. It is hard to achieve ideal performance for all use cases with only one model of speech enhancement. Therefore, the present disclosure proposes to combine multiple enhancers (i.e., separators) in the framework at hand, as schematically illustrated in **Fig. 7.** The system 700 in this implementation comprises a plurality of separators 710-1, ..., 710-M that generate respective outputs output_s1, 715-1 to output _sM, 715-M. The improver 720 receives these outputs and may act as a 'manager' and fine tune its performance by comparing and integrating the outputs 715-1, 715-2, ... 715-M of the separators 710-1, ..., 710-M. Finally, the improver 720 may obtain an aggregated output 725 by reconstructing and weighting the outputs 715-1, 715-2, ... 715-M of all the separators 710-1, ..., 710-M, based on a multi-to-one mapping learned during training.

In general, the above method of audio processing may further comprise one or more additional first steps for applying enhancement to the first component of the audio signal and/or applying suppression to the second component of the audio signal relative to the first component. Therein, the first step described above and the one or more additional first steps generate mutually (e.g., pairwise) different outputs. For instance, these steps may use different models of audio processing (e.g., speech enhancement), and/or different model parameters. Then, the second step receives a respective output of each of the one or more additional first steps in addition to the output of the first step, and jointly applies its deep learning based model to the output of the first step and the outputs of the one or more additional first steps, for perceptually improving the first component of the audio signal. The second step may, inter alia, apply weighting and/or selection to the outputs of the first step and the one or more additional first steps, for example. It is understood that these considerations analogously apply to an apparatus (e.g., system or device), that comprises, in addition to the separator and the improver, one or more additional separators.

*Traditional Speech Enhancement with Deep Learning Based Improver*

A deep learning model structure comprising a separator and an improver has been proposed above. Traditional (e.g., not deep learning based) speech enhancement algorithms cannot be directly embedded into a deep learning model. To derive a speech enhancer that is robust against artifacts introduced by traditional methods, the present disclosure proposes a modified framework, as shown in **Fig. 8.** This framework comprises a traditional speech enhancement algorithm together with a deep learning based improver.

As can be seen from **Fig. 8,** a new training strategy can be resorted to for enabling use of traditional methods as the separator in the proposed framework. Specifically, one or a set of different traditional speech enhancement algorithms can be used, and each of a plurality of noisy signals in a training set 850 can be used as input 805 for processing by each of these algorithms (e.g., separator(s) 810). Subsequently, all the enhanced speech signals 815 as well as the original unprocessed noisy speech signals are collected to form a new comprehensive training set 855, which is then used to train the deep learning based improver 820, which generates output 825. Therein, an unprocessed noisy signal and its multiple enhanced versions correspond to the same target speech signal. In other words, the improver 820 tends to learn a many-to-one mapping. As one implementation, the traditional methods can be spectral subtraction or a Wiener filter based on priori SNR estimation etc., for example.

*Improver Used for Intelligent Banding*

From another point of view, the auto-encoder based improver described above can also be considered as relating to banding and de-banding processing. In a typical signal processing algorithm, more T-F characteristics will be retained for higher band number, but banding may still be necessary for reducing the processing complexity. However, there are many cases where an acceptable performance cannot be achieved by using limited bands when using traditional banding algorithms (e.g., octave band, one-third octave band, etc.). Moreover, it is difficult to assess beforehand which band number should be used in order to achieve a good trade-off between complexity and accuracy.

Regarding the first issue, the aforementioned auto-encoder based improver can be used for implementing an automatic banding scheme. The corresponding framework is schematically illustrated in **Fig. 9.** As such, the improver is split into two parts, a first (front) part 920-1 for receiving an input 905 (e.g., an input audio signal) and automatic banding thereof, and a second (back) part 920-2 for automatic de-banding. Other than the splitting, the same considerations as made above for the auto-encoder based improver also apply here. That is, the front improver 920-1 may comprise a plurality of consecutive layers 930 (e.g., DNN layers) with successively decreasing node number that eventually map to a latent space representation 935 (code), and the back improver 920-2 may also comprise a plurality of consecutive layers 940 (e.g., DNN layers) with successively increasing node number. For example, front and back improvers 920-1, 920-2 may have the same number of layers, the outermost layer of the front improver 920-1 may have the same number of nodes as the outermost layer of the back improver 920-2, the next-to-outermost layer of the front improver 920-1 may have the same number of nodes as the next-to-outermost layer of the back improver 920-2, and so forth, up to respective innermost layers. The separator 910 can be trained based on the intelligent band feature learned by the front improver to obtain the denoised band features. Then the denoised band features (i.e., latent space representation 945) are fed into the back improver for de-banding processing, which will eventually yield a bin-based output 925.

Regarding the second issue, the dimension of the code (e.g., latent representation) in the front improver (i.e., output by the front improver) can be modified to determine the most proper band number. By modifying the dimension of the latent representation, the performance for different band numbers can be assessed. Accordingly, the most appropriate band number can be selected to provide a good trade-off between complexity and accuracy.

As one example implementation, a series of DNN layers (e.g., with 512 and 256 nodes, respectively) can be used for the front improver 920-1 to group a 1025-point spectral magnitude (obtained by a 2048-point STFT with 50% overlap) and obtain a 256-dimensional band feature. For the back improver 920-2, DNN layers with reverse node number assignment as compared to the front improver 920-1 (e.g., 256 and 512 nodes, respectively) can be used. The back improver 920-2 will eventually reconstruct the bin based output (e.g., the bin based mask) based on the output of the separator (e.g., denoised band features).

In general, starting for example from method 1000 in **Fig. 10,** the aforementioned method of audio processing may further comprise a third step of applying a deep learning based model to the audio signal for banding the audio signal. The third step is to be performed before the first step, so that the order of steps is third step - first step - second step. The second step modifies the output of the first step by de-banding the output of the first step. In this configuration, the third and second steps implement an auto-encoder structure for banding and de-banding. They may be said to be based on a single deep learning based model, or alternatively, it may be said that their deep learning based models have been jointly trained. As noted above, the second and third steps may each implement a plurality of consecutive layers with successively increasing and decreasing node number, respectively.

In line with the above, an example of a method 1100 of audio processing (e.g., audio enhancement, such as speech enhancement) using intelligent banding is schematically illustrated in the flowchart of **Fig. 11.** Method 1100 may be a method of speech enhancement, for example. It comprises steps S1110 through S1130.

At step S1110, a deep learning based model is applied to the audio signal for banding the audio signal.

At step S1120, enhancement is applied to a first component of the banded audio signal and/or suppression relative to the first component is applied to a second component of the banded audio signal relative to the first component.

At step S1130, an output of the enhancement step is modified by applying a deep learning based model to the output of the enhancement step for de-banding the output of the enhancement step, and for perceptually improving the first component of the audio signal.

It is understood that the above general considerations for the method of audio processing analogously apply to an apparatus (e.g., system or device) for audio processing.

*Generalization to General Two-Stage Neural Networks*

As described above, the second stage in the proposed framework for audio processing may be an improver for removing artifacts and fixing speech distortion. However, the second stage could also have other functionalities, such as implementing a voice activity detector (VAD), for example. Taking the VAD algorithm as an example, all known VAD algorithms may have a degraded accuracy when there is strong noise. It is very challenging for these algorithms to show robust performance in the presence of various noise types and/or for low SNR in general. With the proposed framework, the separator can be used to denoise the mixture (i.e., the input audio signal), and the improver can be used to perform VAD. Such a VAD system can internally perform the denoising and thus will be more robust with respect to complicated (e.g., noisy) scenarios.

Thus, the aforementioned improver may be replaced by an improver that performs deep learning based VAD on the output of the separator, in addition to or as an alternative to removing distortion and/or artifacts, etc.

Moreover, the proposed two-step training scheme can be generalized to a number of other speech enhancement based applications, such as equalizers or intelligibility meters, for example. The separator may perform speech enhancement as described above and remove the background, and the improver may be trained based on specific requirements. This can achieve more robust and better results compared to the results when only using the original noisy input of the separator. Accordingly, the improver can be specifically adapted so that the separator and the improver jointly achieve the desired application / operation, such as equalizers or intelligibility meters, for example.

*Generalization to Multi-Stage Neural Networks in Audio Processing Chains*

A mature audio signal processing technology chain typically includes several modules (e.g., audio processing modules), some of which may use traditional signal processing methods, and some of which may be based on deep learning. These modules are typically cascaded in series to get the desired final output. Based on the proposed framework, each module or part of the module in such signal processing chain can be embedded into a large deep learning based model. When training, each module can be trained in turn (i.e., separately and in sequence) and its output can be supervised to meet the desired outcome, up to the end of the last module training. The whole model will become a chain of audio processing technologies based on deep learning, and the modules will work together as expected in the model.

That being said, the present disclosure also relates to any pairing of a signal processing module (e.g., adapted to perform audio processing, audio enhancement, etc.), followed by a deep learning based improver, trained to improve the output of the signal processing module. Improving the output of the signal processing module may include one or more of removing artifacts, removing distortion, and/or removing noise.

*Example Computing Device*

A method of audio processing (e.g., speech enhancement) has been described above. Additionally, the present disclosure also relates to an apparatus (e.g., system or device) for carrying out this method. An example of such apparatus is shown in **Fig. 1.** Moreover, in line with the method 1000 illustrated in **Fig. 10,** an apparatus for processing an audio signal according to the present disclosure can be said to comprise a first stage and a second stage. The first and second stages may be implemented in hardware and/or software. The first stage is adapted for applying enhancement to a first component of the audio signal and/or applying suppression to a second component of the audio signal. The second stage is adapted for modifying an output of the first stage by applying a deep learning based model to the output of the first stage, for perceptually improving the first component of the audio signal. Other than that, any of the considerations made above may apply to the first and second stages.

In general, the present disclosure relates to an apparatus comprising a processor and a memory coupled to the processor, wherein the processor is adapted to carry out the steps of the method(s) described herein. For example, the processor may be adapted to implement the aforementioned first and second stages.

These aforementioned apparatus (and their stages) may be implemented by a server computer, a client computer, a personal computer (PC), a tablet PC, a set-top box (STB), a personal digital assistant (PDA), a cellular telephone, a smartphone, a web appliance, a network router, switch or bridge, or any machine capable of executing instructions (sequential or otherwise) that specify actions to be taken by that apparatus. Further, while only a single apparatus 1400 is illustrated in the figures, the present disclosure shall relate to any collection of apparatus that individually or jointly execute instructions to perform any one or more of the methodologies discussed herein.

The present disclosure further relates to a program (e.g., computer program) comprising instructions that, when executed by a processor, cause the processor to carry out some or all of the steps of the methods described herein.

Yet further, the present disclosure relates to a computer-readable (or machine-readable) storage medium storing the aforementioned program. Here, the term "computer-readable storage medium" includes, but is not be limited to, data repositories in the form of solid-state memories, optical media, and magnetic media, for example.

*Interpretation and Additional Configuration Considerations*

The present disclosure relates to methods of audio processing and apparatus (e.g., systems or devices) for audio processing. It is understood that any statements made with regard to the methods and their steps likewise and analogously apply to the corresponding apparatus and their stages / blocks / units, and vice versa.

Unless specifically stated otherwise, as apparent from the following discussions, it is appreciated that throughout the disclosure discussions utilizing terms such as "processing," "computing," "calculating," "determining", analyzing" or the like, refer to the action and/or processes of a computer or computing system, or similar electronic computing devices, that manipulate and/or transform data represented as physical, such as electronic, quantities into other data similarly represented as physical quantities.

In a similar manner, the term "processor" may refer to any device or portion of a device that processes electronic data, e.g., from registers and/or memory to transform that electronic data into other electronic data that, e.g., may be stored in registers and/or memory. A "computer" or a "computing machine" or a "computing platform" may include one or more processors.

The methodologies described herein are, in one example embodiment, performable by one or more processors that accept computer-readable (also called machine-readable) code containing a set of instructions that when executed by one or more of the processors carry out at least one of the methods described herein. Any processor capable of executing a set of instructions (sequential or otherwise) that specify actions to be taken are included. Thus, one example is a typical processing system that includes one or more processors. Each processor may include one or more of a CPU, a graphics processing unit, and a programmable DSP unit. The processing system further may include a memory subsystem including main RAM and/or a static RAM, and/or ROM. A bus subsystem may be included for communicating between the components. The processing system further may be a distributed processing system with processors coupled by a network. If the processing system requires a display, such a display may be included, e.g., a liquid crystal display (LCD) or a cathode ray tube (CRT) display. If manual data entry is required, the processing system also includes an input device such as one or more of an alphanumeric input unit such as a keyboard, a pointing control device such as a mouse, and so forth. The processing system may also encompass a storage system such as a disk drive unit. The processing system in some configurations may include a sound output device, and a network interface device. The memory subsystem thus includes a computer-readable carrier medium that carries computer-readable code (e.g., software) including a set of instructions to cause performing, when executed by one or more processors, one or more of the methods described herein. Note that when the method includes several elements, e.g., several steps, no ordering of such elements is implied, unless specifically stated. The software may reside in the hard disk, or may also reside, completely or at least partially, within the RAM and/or within the processor during execution thereof by the computer system. Thus, the memory and the processor also constitute computer-readable carrier medium carrying computer-readable code. Furthermore, a computer-readable carrier medium may form, or be included in a computer program product.

In alternative example embodiments, the one or more processors operate as a standalone device or may be connected, e.g., networked to other processor(s), in a networked deployment, the one or more processors may operate in the capacity of a server or a user machine in server-user network environment, or as a peer machine in a peer-to-peer or distributed network environment. The one or more processors may form a personal computer (PC), a tablet PC, a Personal Digital Assistant (PDA), a cellular telephone, a web appliance, a network router, switch or bridge, or any machine capable of executing a set of instructions (sequential or otherwise) that specify actions to be taken by that machine.

Note that the term "machine" shall also be taken to include any collection of machines that individually or jointly execute a set (or multiple sets) of instructions to perform any one or more of the methodologies discussed herein.

Thus, one example embodiment of each of the methods described herein is in the form of a computer-readable carrier medium carrying a set of instructions, e.g., a computer program that is for execution on one or more processors, e.g., one or more processors that are part of web server arrangement. Thus, as will be appreciated by those skilled in the art, example embodiments of the present disclosure may be embodied as a method, an apparatus such as a special purpose apparatus, an apparatus such as a data processing system, or a computer-readable carrier medium, e.g., a computer program product. The computer-readable carrier medium carries computer readable code including a set of instructions that when executed on one or more processors cause the processor or processors to implement a method. Accordingly, aspects of the present disclosure may take the form of a method, an entirely hardware example embodiment, an entirely software example embodiment or an example embodiment combining software and hardware aspects. Furthermore, the present disclosure may take the form of carrier medium (e.g., a computer program product on a computer-readable storage medium) carrying computer-readable program code embodied in the medium.

The software may further be transmitted or received over a network via a network interface device. While the carrier medium is in an example embodiment a single medium, the term "carrier medium" should be taken to include a single medium or multiple media (e.g., a centralized or distributed database, and/or associated caches and servers) that store the one or more sets of instructions. The term "carrier medium" shall also be taken to include any medium that is capable of storing, encoding or carrying a set of instructions for execution by one or more of the processors and that cause the one or more processors to perform any one or more of the methodologies of the present disclosure. A carrier medium may take many forms, including but not limited to, non-volatile media, volatile media, and transmission media. Non-volatile media includes, for example, optical, magnetic disks, and magnetooptical disks. Volatile media includes dynamic memory, such as main memory. Transmission media includes coaxial cables, copper wire and fiber optics, including the wires that comprise a bus subsystem. Transmission media may also take the form of acoustic or light waves, such as those generated during radio wave and infrared data communications. For example, the term "carrier medium" shall accordingly be taken to include, but not be limited to, solid-state memories, a computer product embodied in optical and magnetic media; a medium bearing a propagated signal detectable by at least one processor or one or more processors and representing a set of instructions that, when executed, implement a method; and a transmission medium in a network bearing a propagated signal detectable by at least one processor of the one or more processors and representing the set of instructions.

It will be understood that the steps of methods discussed are performed in one example embodiment by an appropriate processor (or processors) of a processing (e.g., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

Reference throughout this disclosure to "one example embodiment", "some example embodiments" or "an example embodiment" means that a particular feature, structure or characteristic described in connection with the example embodiment is included in at least one example embodiment of the present disclosure. Thus, appearances of the phrases "in one example embodiment", "in some example embodiments" or "in an example embodiment" in various places throughout this disclosure are not necessarily all referring to the same example embodiment. Furthermore, the particular features, structures or characteristics may be combined in any suitable manner, as would be apparent to one of ordinary skill in the art from this disclosure, in one or more example embodiments.

As used herein, unless otherwise specified the use of the ordinal adjectives "first", "second", "third", etc., to describe a common object, merely indicate that different instances of like objects are being referred to and are not intended to imply that the objects so described must be in a given sequence, either temporally, spatially, in ranking, or in any other manner.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

It should be appreciated that in the above description of example embodiments of the disclosure, various features of the disclosure are sometimes grouped together in a single example embodiment, Fig., or description thereof for the purpose of streamlining the disclosure and aiding in the understanding of one or more of the various inventive aspects. This method of disclosure, however, is not to be interpreted as reflecting an intention that the claims require more features than are expressly recited in each claim. Rather, as the following claims reflect, inventive aspects lie in less than all features of a single foregoing disclosed example embodiment. Thus, the claims following the Description are hereby expressly incorporated into this Description, with each claim standing on its own as a separate example embodiment of this disclosure.

Furthermore, while some example embodiments described herein include some but not other features included in other example embodiments, combinations of features of different example embodiments can be within the scope of the invention as defined by the appended claims.

In the description provided herein, numerous specific details are set forth. However, it is understood that example embodiments of the disclosure may be practiced without these specific details. In other instances, well-known methods, structures and techniques have not been shown in detail in order not to obscure an understanding of this description.

## Claims

1.    A method of processing an audio signal, comprising:

   a first step for applying enhancement to a first component of the audio signal and/or applying suppression to a second component of the audio signal relative to the first component, wherein the output of the first step is a transform domain mask indicating weighting coefficients for individual bins or bands, and wherein applying the mask to the audio signal results in the enhancement of the first component and/or the suppression of the second component relative to the first component; and
   a second step of modifying the output of the first step by applying a deep learning based model to the output of the first step, for perceptually improving the first component of the audio signal by removing artifacts and/or distortions introduced in the audio signal by the first step.

2.    The method according to claim 1, wherein the first step is a step for applying speech enhancement to the audio signal.

3.    The method according to any one of claims 1 to 2, wherein the second step receives a plurality of instances of output of the first step, each of the instances corresponding to a respective one of a plurality of frames of the audio signal, and wherein the second step jointly applies the machine learning based model to the plurality of instances of output, for perceptually improving the first component of the audio signal in one or more of the plurality of frames of the audio signal.

4.    The method according to any one of claims 1 to 3, wherein the second step receives, for a given frame of the audio signal, a sequence of instances of output of the first step, each of the instances corresponding to a respective one in a sequence of frames of the audio signal, the sequence of frames including the given frame, and wherein the second step jointly applies the machine learning based model to the sequence of instances of output, for perceptually improving the first component of the audio signal in the given frame.

5.    The method according to any one of claims 1 to 4, wherein the deep learning based model of the second step implements an auto-encoder architecture with an encoder stage and a decoder stage, each stage comprising a respective plurality of consecutive filter layers, and wherein the encoder stage maps an input to the encoder stage to a latent space representation, and the decoder stage maps the latent space representation output by the encoder stage to an output of the decoder stage that has the same format as the input to the encoder stage.

6.    The method according to any one of claims 1 to 4, wherein the deep learning based model of the second step implements a recurrent neural network architecture with a plurality of consecutive layers, wherein the plurality of layers are layers of long short-term memory type or gated recurrent unit type.

7.    The method according to any one of claims 1 to 4, wherein the deep learning based model implements a generative model architecture with a plurality of consecutive convolutional layers.

8. The method according to any one of claims 1 to 7, further comprising one or more additional first steps for applying enhancement to the first component of the audio signal and/or applying suppression to the second component of the audio signal, the first step and the one or more additional first steps generating mutually different outputs;

   wherein the second step receives an output of each of the one or more additional first steps in addition to the output of the first step; and
   wherein the second step jointly applies the deep learning based model to the output of the first step and the outputs of the one or more additional first steps, for perceptually improving the first component of the audio signal.

9. The method according to any one of the preceding claims, further comprising a third step of applying a deep learning based model to the audio signal for banding the audio signal prior to input to the first step;

   wherein the second step modifies the output of the first step by de-banding the output of the first step; and
   wherein the deep learning based models of the second and third steps have been jointly trained.

10. The method according to claim 9, wherein the second and third steps each implement a plurality of consecutive layers with successively increasing and decreasing node number, respectively.

11. The method according to any one of claims 1 to 10, wherein the first step applies a deep learning based model for enhancing the first component of the audio signal and/or suppressing the second component of the audio signal relative to the first component.

12. The method according to claim 11, wherein the deep learning models of the first step and second step are trained separately via back propagation; or
wherein the deep learning models of the first step and second step are trained simultaneously using a common loss function.

13. An apparatus for processing an audio signal, comprising:

   a first stage for applying enhancement to a first component of the audio signal and/or applying suppression to a second component of the audio signal relative to the first component, wherein the output of the first stage is a transform domain mask indicating weighting coefficients for individual bins or bands, and wherein applying the mask to the audio signal results in the enhancement of the first component and/or the suppression of the second component relative to the first component; and
   a second stage for modifying the output of the first stage by applying a deep learning based model to the output of the first stage, for perceptually improving the first component of the audio signal by removing artifacts and/or distortions introduced in the audio signal by the first stage.

14. A computer program comprising instructions that when executed by a computing device cause the computing device to carry out the steps of the method according to any one of claims 1 to 12.

15. A computer-readable storage medium storing the computer program according to claim 14.

**Patentansprüche**

1. Verfahren zum Verarbeiten eines Audiosignals, umfassend:

   einen ersten Schritt zum Anwenden einer Verbesserung auf eine erste Komponente des Audiosignals und/oder Anwenden einer Unterdrückung auf eine zweite Komponente des Audiosignals in Bezug zur ersten Komponente, wobei die Ausgabe des ersten Schritts eine Transformationsbereichsmaske ist, die Gewichtungskoeffizienten für einzelne Bins oder Bänder angibt, und wobei Anwenden der Maske auf das Audiosignal zu der Verbesserung der ersten Komponente und/oder der Unterdrückung der zweiten Komponente in Bezug zur ersten Komponente führt; und
   einen zweiten Schritt des Modifizierens der Ausgabe des ersten Schritts durch Anwenden eines auf Deep Learning basierenden Modells auf die Ausgabe des ersten Schritts, zum wahrnehmbaren Verbessern der ersten Komponente des Audiosignals durch Entfernen von Artefakten und/oder Verzerrungen, die durch den ersten Schritt in das Audiosignal eingeführt wurden.

**2.** Verfahren nach Anspruch 1, wobei der erste Schritt ein Schritt zum Anwenden einer Sprachverbesserung auf das Audiosignal ist.

**3.** Verfahren nach einem der Ansprüche 1 bis 2, wobei der zweite Schritt eine Vielzahl von Instanzen einer Ausgabe des ersten Schritts empfängt, wobei jede der Instanzen einem jeweiligen einer Vielzahl von Frames des Audiosignals entspricht, und wobei der zweite Schritt das auf maschinellem Lernen basierende Modell gemeinsam auf die Vielzahl von Instanzen einer Ausgabe zum wahrnehmbaren Verbessern der ersten Komponente des Audiosignals in einem oder mehreren der Vielzahl von Frames des Audiosignals anwendet.

**4.** Verfahren nach einem der Ansprüche 1 bis 3, wobei der zweite Schritt für einen gegebenen Frame des Audiosignals eine Sequenz von Instanzen einer Ausgabe des ersten Schritts empfängt, wobei jede der Instanzen einer jeweiligen in einer Sequenz von Frames des Audiosignals entspricht, wobei die Sequenz von Frames den gegebenen Frame beinhaltet, und wobei der zweite Schritt das auf maschinellem Lernen basierende Modell gemeinsam auf die Sequenz von Instanzen einer Ausgabe zum wahrnehmbaren Verbessern der ersten Komponente des Audiosignals in dem gegebenen Frame anwendet.

**5.** Verfahren nach einem der Ansprüche 1 bis 4, wobei das auf Deep Learning basierende Modell des zweiten Schritts eine Autoencoder-Architektur mit einer Encoder-Stufe und einer Decoder-Stufe umsetzt, wobei jede Stufe eine jeweilige Vielzahl aufeinanderfolgender Filterschichten umfasst, und wobei die Encoder-Stufe eine Eingabe in die Encoder-Stufe auf eine latente Raumdarstellung abbildet, und die Decoder-Stufe die von der Encoder-Stufe ausgegebene latente Raumdarstellung auf eine Ausgabe von der Decoder-Stufe abbildet, die das gleiche Format wie die Eingabe in die Encoder-Stufe aufweist.

**6.** Verfahren nach einem der Ansprüche 1 bis 4, wobei das auf Deep Learning basierende Modell des zweiten Schritts eine rekurrente neuronale Netzwerkarchitektur mit einer Vielzahl von aufeinanderfolgenden Schichten umsetzt, wobei die Vielzahl von Schichten Schichten vom Typ "Long Short-Term Memory" oder "Gated Recurrent Unit" sind.

**7.** Verfahren nach einem der Ansprüche 1 bis 4, wobei das auf Deep Learning basierende Modell eine generative Modellarchitektur mit einer Vielzahl aufeinanderfolgender Faltungsschichten umsetzt.

**8.** Verfahren nach einem der Ansprüche 1 bis 7, das weiter einen oder mehrere zusätzliche erste Schritte zum Anwenden einer Verbesserung auf die erste Komponente des Audiosignals und/oder Anwenden einer Unterdrückung auf die zweite Komponente des Audiosignals umfasst, wobei der erste Schritt und der eine oder die mehreren zusätzlichen ersten Schritte voneinander verschiedene Ausgaben erzeugen;

wobei der zweite Schritt zusätzlich zu der Ausgabe des ersten Schritts eine Ausgabe jedes von dem einen oder den mehreren zusätzlichen ersten Schritten empfängt; und
wobei der zweite Schritt das auf Deep Learning basierende Modell gemeinsam auf die Ausgabe des ersten Schritts und die Ausgaben des einen oder der mehreren zusätzlichen ersten Schritte zum wahrnehmbaren Verbessern der ersten Komponente des Audiosignals anwendet.

**9.** Verfahren nach einem der vorstehenden Ansprüche, das weiter einen dritten Schritt zum Anwenden eines auf Deep Learning basierendes Modells auf das Audiosignal zum Bändern des Audiosignals vor der Eingabe in den ersten Schritt umfasst;

wobei der zweite Schritt die Ausgabe des ersten Schritts durch Entbändern der Ausgabe des ersten Schritts modifiziert; und
wobei die auf Deep Learning basierenden Modelle des zweiten und dritten Schritts gemeinsam trainiert worden sind.

**10.** Verfahren nach Anspruch 9, wobei der zweite und der dritte Schritt jeweils eine Vielzahl aufeinanderfolgender Schichten mit sukzessive zunehmender beziehungsweise abnehmender Knotenzahl umsetzen.

**11.** Verfahren nach einem der Ansprüche 1 bis 10, wobei der erste Schritt ein auf Deep-Learning basierendes Modell zum Verbessern der ersten Komponente des Audiosignals und/oder Unterdrücken der zweiten Komponente des Audiosignals in Bezug zur ersten Komponente anwendet.

**12.** Verfahren nach Anspruch 11, wobei die Deep-Learning-Modelle des ersten Schritts und des zweiten Schritts getrennt über Backpropagation trainiert werden; oder wobei die Deep-Learning-Modelle des ersten Schritts und des zweiten Schritts gleichzeitig unter Verwendung einer gemeinsamen Verlustfunktion trainiert werden.

13. Einrichtung zum Verarbeiten eines Audiosignals, umfassend:

eine erste Stufe zum Anwenden einer Verbesserung auf eine erste Komponente des Audiosignals und/oder Anwenden einer Unterdrückung auf eine zweite Komponente des Audiosignals in Bezug zur ersten Komponente, wobei die Ausgabe der ersten Stufe eine Transformationsbereichsmaske ist, die Gewichtungskoeffizienten für einzelne Bins oder Bänder angibt, und wobei Anwenden der Maske auf das Audiosignal zu der Verbesserung der ersten Komponente und/oder der Unterdrückung der zweiten Komponente in Bezug zur ersten Komponente führt; und

eine zweite Stufe zum Modifizieren der Ausgabe der ersten Stufe durch Anwenden eines auf Deep Learning basierenden Modells auf die Ausgabe der ersten Stufe, zum wahrnehmbaren Verbessern der ersten Komponente des Audiosignals durch Entfernen von Artefakten und/oder Verzerrungen, die durch die erste Stufe in das Audiosignal eingeführt wurden.

14. Computerprogramm, das Anweisungen umfasst, die, wenn sie von einer Rechenvorrichtung ausgeführt werden, die Rechenvorrichtung veranlassen, die Schritte des Verfahren nach einem der Ansprüche 1 bis 12 auszuführen.

15. Computerlesbares Speichermedium, welches das Computerprogramm nach Anspruch 14 speichert.

**Revendications**

1. Procédé de traitement d'un signal audio, comprenant :

une première étape consistant à appliquer une amélioration à une première composante du signal audio et/ou à appliquer une suppression à une seconde composante du signal audio par rapport à la première composante, dans lequel la sortie de la première étape est un masque de domaine de transformation indiquant des coefficients de pondération pour des compartiments ou bandes individuels, et dans lequel l'application du masque au signal audio engendre l'amélioration de la première composante et/ou la suppression de la seconde composante par rapport à la première composante ; et

une deuxième étape consistant à modifier la sortie de la première étape en appliquant un modèle basé sur l'apprentissage profond à la sortie de la première étape, pour améliorer perceptuellement la première composante du signal audio en supprimant des artefacts et/ou des distorsions introduits dans le signal audio par la première étape.

2. Procédé selon la revendication 1, dans lequel la première étape est une étape consistant à appliquer une amélioration de la parole au signal audio.

3. Procédé selon l'une quelconque des revendications 1 et 2, dans lequel la deuxième étape reçoit une pluralité d'instances de sortie de la première étape, chacune des instances correspondant à une trame respective d'une pluralité de trames du signal audio, et dans lequel la deuxième étape applique conjointement le modèle basé sur l'apprentissage automatique à la pluralité d'instances de sortie, pour améliorer perceptuellement la première composante du signal audio dans une ou plusieurs de la pluralité de trames du signal audio.

4. Procédé selon l'une quelconque des revendications 1 à 3, dans lequel la deuxième étape reçoit, pour une trame donnée du signal audio, une séquence d'instances de sortie de la première étape, chacune des instances correspondant à une trame respective dans une séquence de trames du signal audio, la séquence de trames incluant la trame donnée, et dans lequel la deuxième étape applique conjointement le modèle basé sur l'apprentissage automatique à la séquence d'instances de sortie, pour améliorer perceptuellement la première composante du signal audio dans la trame donnée.

5. Procédé selon l'une quelconque des revendications 1 à 4, dans lequel le modèle basé sur l'apprentissage profond de la deuxième étape met en œuvre une architecture d'auto-encodeur avec un étage d'encodeur et un étage de décodeur, chaque étage comprenant une pluralité respective de couches de filtre consécutives, et dans lequel l'étage d'encodeur mappe une entrée de l'étage d'encodeur à une représentation d'espace latent, et l'étage de décodeur mappe la représentation d'espace latent délivrée par l'étage d'encodeur à une sortie de l'étage de décodeur qui a le même format que l'entrée de l'étage d'encodeur.

6. Procédé selon l'une quelconque des revendications 1 à 4, dans lequel le modèle basé sur l'apprentissage profond de la deuxième étape met en œuvre une architecture de réseau neuronal récurrent avec une pluralité de couches consécutives, dans lequel la pluralité de couches sont des couches de type mémoire à long terme ou de type unité récurrente à portes.

7. Procédé selon l'une quelconque des revendications 1 à 4, dans lequel le modèle basé sur l'apprentissage profond met en œuvre une architecture de modèle génératif avec une pluralité de couches convolutives consécutives.

8. Procédé selon l'une quelconque des revendications 1 à 7, comprenant en outre une ou plusieurs premières étapes supplémentaires consistant à appliquer une amélioration à la première composante du signal audio et/ou à appliquer une suppression à la seconde composante du signal audio, la première étape et la ou les premières étapes supplémentaires générant des sorties mutuellement différentes ;

dans lequel la deuxième étape reçoit une sortie de chacune de la ou des premières étapes supplémentaires en plus de la sortie de la première étape ; et
dans lequel la deuxième étape applique conjointement le modèle basé sur l'apprentissage profond à la sortie de la première étape et aux sorties de la ou des premières étapes supplémentaires, pour améliorer perceptuellement la première composante du signal audio.

9. Procédé selon l'une quelconque des revendications précédentes, comprenant en outre une troisième étape consistant à appliquer un modèle basé sur l'apprentissage profond au signal audio pour la mise en bande du signal audio avant l'entrée dans la première étape ;

dans lequel la deuxième étape modifie la sortie de la première étape par la mise hors bande de la sortie de la première étape ; et
dans lequel les modèles basés sur l'apprentissage profond des deuxième et troisième étapes ont été entraînés conjointement.

10. Procédé selon la revendication 9, dans lequel les deuxième et troisième étapes mettent chacune en œuvre une pluralité de couches consécutives respectivement avec un nombre de nœuds successivement croissant et décroissant.

11. Procédé selon l'une quelconque des revendications 1 à 10, dans lequel la première étape applique un modèle basé sur l'apprentissage profond pour améliorer la première composante du signal audio et/ou pour supprimer la deuxième composante du signal audio par rapport à la première composante.

12. Procédé selon la revendication 11, dans lequel les modèles d'apprentissage profond de la première étape et de la deuxième étape sont entraînés séparément via une rétropropagation ; ou dans lequel les modèles d'apprentissage profond de la première étape et de la deuxième étape sont entraînés simultanément à l'aide d'une fonction de perte commune.

13. Appareil de traitement d'un signal audio, comprenant :

un premier étage consistant à appliquer une amélioration à une première composante du signal audio et/ou à appliquer une suppression à une seconde composante du signal audio par rapport à la première composante, dans lequel la sortie du premier étage est un masque de domaine de transformation indiquant des coefficients de pondération pour des compartiments ou bandes individuels, et dans lequel l'application du masque au signal audio engendre l'amélioration de la première composante et/ou la suppression de la seconde composante par rapport à la première composante ; et
un second étage consistant à modifier la sortie du premier étage en appliquant un modèle basé sur l'apprentissage profond à la sortie du premier étage, pour améliorer perceptuellement la première composante du signal audio en supprimant des artefacts et/ou des distorsions introduits dans le signal audio par le premier étage.

14. Programme informatique comprenant des instructions qui, lorsqu'elles sont exécutées par un dispositif informatique, amènent ledit dispositif informatique à réaliser les étapes du procédé selon l'une quelconque des revendications 1 à 12.

**15.** Support de stockage lisible par ordinateur stockant le programme informatique selon la revendication 14.

FIG. 1

FIG. 2

FIG. 3

FIG. 4

FIG. 5

FIG. 6

EP 4 315 327 B1

FIG. 7

FIG. 8

900

BANDING

DE-BANDING

CODE

905

INPUT

930

OUTPUT

925

SEPARATOR

930

935

910

945

940

940

920-1
FRONT 'IMPROVER'

920-2
BACK 'IMPROVER'

FIG. 9

S1010 — APPLYING ENHANCEMENT TO A FIRST COMPONENT OF THE AUDIO SIGNAL AND/OR APPLYING SUPPRESSION TO A SECOND COMPONENT OF THE AUDIO SIGNAL

1000

S1020 — MODIFYING AN OUTPUT OF THE ENHANCEMENT STEP BY APPLYING A DEEP LEARNING BASED MODEL TO THE OUTPUT OF THE ENHANCEMENT STEP, FOR PERCEPTUALLY IMPROVING THE FIRST COMPONENT OF THE AUDIO SIGNAL

FIG. 10

1100

APPLYING A DEEP LEARNING BASED MODEL TO THE AUDIO SIGNAL FOR BANDING THE AUDIO SIGNAL — S1110

APPLYING ENHANCEMENT TO A FIRST COMPONENT OF THE BANDED AUDIO SIGNAL AND/OR APPLYING SUPPRESSION TO A SECOND COMPONENT OF THE BANDED AUDIO SIGNAL — S1120

MODIFYING AN OUTPUT OF THE ENHANCEMENT STEP BY APPLYING A DEEP LEARNING BASED MODEL TO THE OUTPUT OF THE ENHANCEMENT STEP FOR DE-BANDING THE OUTPUT OF THE ENHANCEMENT STEP, AND FOR PERCEPTUALLY IMPROVING THE FIRST COMPONENT OF THE AUDIO SIGNAL — S1130

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3716270 A1

- US 2020312343 A1, HSIUNG WEI WEI

**Non-patent literature cited in the description**

- **KIM MINJE et al.** Adaptive Denoising Autoencoders: A Fine-Tuning Scheme to Learn from Test Mixtures. *Latent Variable Analysis and Signal Separation : 12th International Conference, LVA/ICA*, 2015